Europäisches Patentamt

European Patent Office

Office européen des brevets

(19)

(11) Veröffentlichungsnummer: **0 083 403**
**B1**

(12) ## EUROPÄISCHE PATENTSCHRIFT

(45) Veröffentlichungstag der Patentschrift:
09.04.86

(21) Anmeldenummer: 82110048.4

(22) Anmeldetag: 30.10.82

(51) Int. Cl.⁴: **F 16 K 31/363**, F 16 K 47/04

(54) Druckbegrenzungsventil.

(30) Priorität: 15.12.81 DE 3149604

(43) Veröffentlichungstag der Anmeldung:
13.07.83 Patentblatt 83/28

(45) Bekanntmachung des Hinweises auf die Patenterteilung:
09.04.86 Patentblatt 86/15

(84) Benannte Vertragsstaaten:
AT DE FR GB

(56) Entgegenhaltungen:
DE - A - 1 964 338
DE - C - 1 033 469

(73) Patentinhaber: Klöckner-Humboldt-Deutz Aktiengesellschaft,
Deutz-Mülheimer-Strasse 111 Postfach 80 05 09,
D-5000 Köln 80 (DE)

(72) Erfinder: zur Nieden, Achim, Dipl.-Ing., Im Falkenhorst 8,
D-5000 Köln 90 (DE)

LIBER, STOCKHOLM 1986

## Beschreibung

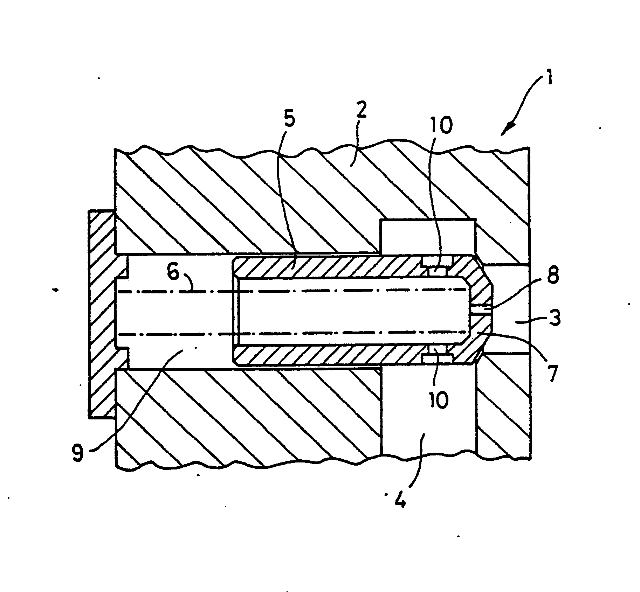

Die Erfindung bezieht sich auf ein Druckbegrenzungsventil der im Oberbegriff des Anspruchs 1 angegebenen Art, bekannt aus der DE-C-1 033 469, Abb. 1.

Bei derartigen Druckbegrenzungsventilen hat sich gezeigt, daß hohe Druckspitzen beim Ansprechvorgang auftreten können. Derartige Druckspitzen sind für alle Bauelemente eines Hydraulikkreislaufes (Ölkreislaufes) gefährlich.

Ferner hat sich gezeigt, daß ein Druckbegrenzungsventil nach der DE-C-10 33 469 auch zu selbsterregten oder fremderregten Schwingungen neigt, die einen sicheren Betrieb der betreffenden Hydraulikanlage unmöglich machen.

Darüberhinaus wird immer wieder festgestellt, daß Druckbegrenzungsventile in vielen Fällen unangenehme Geräuschquellen darstellen, die für die Umgebung störend sind.

In der DE-A-1.964.338 wird daher als Abhilfe vorgeschlagen, ein Vorsteuerventil zu verwenden, welches aus einem einstellbaren, federbelasteten Ventil mit einer oder mehreren Drosselstellen besteht, die in oder an einem zusätzlichen kolbenartigen Körper angeordnet sind, der in einem Zylinderraum bewegbar ist und der die Öffnungsbewegung des Vorsteuerventilkörpers mitmacht.

Der Nachteil dieser Lösung besteht in ihrem Aufwand, da die Lösung der Aufgabe neben dem zu dämpfenden Ventil ein Vorsteuerventil und einen kolbenartigen Körper mit Drosselstellen verlangt.

Der Erfindung liegt die Aufgabe zugrunde, die Schwingungsdämpfung eines hydraulischen Kolbenventils in einfacher Weise sicherzustellen.

Mit der Erfindung, wie sie in dem Anspruch 1 gekennzeichnet ist, ist ein Druckbegrenzungsventil geschaffen, daß sowohl hohe Druckspitzen beim Ansprechvorgang vermeidet wie auch weitgehend keine selbsterregten oder fremderregten Schwingungen zeigt. Insbesondere hat sich herausgestellt, daß mit der erfindungsgemäßen Dimensionierung der Drosselstelle und der Verbindungsbohrung ein Druckbegrenzungsventil geschaffen ist, das weitgehend geräuscharm arbeitet, so daß eine Geräuschbelastung der Umgebung vermieden ist.

Durch die im Anspruch 1 vorgeschlagenen Größenverhältnisse wird gewährleistet, daß der ständige Hydraulikmitteldurchsatz durch die Zusatzbohrungen relativ zum Arbeitsdurchsatz so gering ist, daß er vernachlässigt werden kann. Sie sind jedoch so ausgelegt, daß sich im Federraum kein störender Überdruck ausbilden kann.

Eine besondere Ausführungsart der Erfindung ist in dem Anspruch 2 angegeben.

Im folgenden wird die Erfindung an einem ausgewählten Beispiel näher erläutert.

In der Fig. 1 ist ein hydraulisches Druckbegrenzungsventil mit der erfindungsgemäßen Ausgestaltung schematisch, d. h., nur alle zum Verständnis der Erfindung notwendigen Elemente sind vorhanden, dargestellt.

Das Ventil 1 besteht aus einem Gehäuse 2 mit einer Einlaßöffnung 3 und einer in diesem Beispiel senkrecht hierzu angeordneten Auslaßöffnung 4 für ein Hydraulikmedium, beispielsweise Schmieröl aus dem Schmierölkreislauf einer Brennkraftmaschine. Die Einlaßöffnung 3 wird beherrscht von einem Kolben 5, der in dem Gehäuse 2 gleitend bewegbar ist. Im drucklosen Zustand wird der Kolben 5 von einer Feder 6 gegen die Einlaßöffnung 3 gepreßt, so daß diese verschlossen ist.

Auf der der Einlaßöffnung 3 zugewandten Kolbenstirnseite 7 - falls der Kolben hohl ist - ist eine Drosselbohrung 8 vorgesehen. Sie verbindet - unabhängig von der Stellungs des Kolbens 5 - die Einlaßöffnung 3 mit dem Federraum 9. Aus dem Federraum 9 führen zwei weitere Bohrungen = Verbindungsbohrungen 10, die ebenfalls unabhängig von der Stellung des Kolbens 5 ständig geöffnet sind, zu der Auslaßöffnung 4. Es ist aber alternativ ebenfalls möglich, die Auslaßöffnung 4 mit dem Federraum 9 nur durch eine Bohrung 10 in den angegebenen Größenverhältnissen zu verbinden.

Der Durchmesser der Drosselbohrung 8 beträgt maximal ein Zehntel desjenigen der Einlaßöffnung 3. Der Durchmesser jeder Bohrung 10 ist höchstens im Verhältnis 3:1 zum Durchmesser der Drosselbohrung 8 ausgebildet. Beträgt der Durchmesser der Einlaßöffnung 3 zum Beispiel 10 mm, so ist der Durchmesser der Drosselbohrung 8 maximal 1 mm, bevorzugt 0,6 mm, und der Durchmesser jeder Bohrung 10 höchstens 3 mm.

Die Dämpfungswirkung entsteht dadurch, daß bei allen Hubbewegungen des Kolbens 5 zu- oder abfließendes Hydraulikmittel durch die Drosselbohrung 8 bzw. auch durch die Bohrungen 10 gedrückt werden muß. Hierbei ist der Federraum 9 ständig mit Hydraulikmittel gefüllt, wobei seine Größe abhängig von der augenblicklichen Kolbenstellung ist. Aufgrund der Größenverhältnisse der Bohrungen zueinander ist ebenfalls gewährleistet, daß beim Ansprechen des Kolbenventils 1 keine Druckstöße auftreten, die die Hydraulikanlage belasten würde.

Derartige gedämpfte Kolbenventile lassen sich vielfältig in Hydraulikanlagen verwenden. Sie können auch mit Erfolg zum Absteuern von Schmieröl an Ölpumpen in Verbrennungskraftmaschinen eingesetzt werden. In diesem Fall führt die Auslaßöffnung 4 drucklos in den Schmierölvorratsbehälter oder in den Saugkanal der Ölpumpe zurück.

## Patentansprüche

1. Druckbegrenzungsventil bestehend aus einem in einem Gehäuse (2) verschiebbar gelagerten Kolben (5) zur Steuerung eines Druckmittelflusses von einem Einlaß (3) zu einem Auslaß (4), wobei bei geschlossenem Ventil eine Stirnseite (7) des Kolbens (5) den Einlaß (3) weitgehend verschließt und bei offenem Ventil der Kolben (5) durch das auf die Stirnseite (7) wirkende Druckmittel gegen die Kraft einer Feder (6) verschoben ist und einen ungedrosselten Druckmittelfluß vom Einlaß (3) zum Auslaß (4) freigibt, wobei der vom Kolben (5) begrenzte Federraum (9) über eine unabhängig von der Stellung des Kolbens (5) ständig geöffnete Verbindungsbohrung (10) mit dem Auslaß (4) verbunden ist und wobei in der dem Einlaß (3) zugewandten Stirnseite des Kolben (5) eine in den Federraum (9) mündende Drosselbohrung (8) angeordnet ist,

dadurch gekennzeichnet, daß der Durchmesser der Drosselbohrung (8) maximal ein Zehntel des Durchmessers des Einlasses (3) beträgt und daß der Durchmesser der Verbindungsbohrung (10) höchstens dreimal so groß wie der Durchmesser der Drosselbohrung (8) ist.

2. Druckbegrenzungsventil nach Anspruch 1,
dadurch gekennzeichnet, daß der Kolben ein Hohlkolben (5) ist und daß die Verbindungsbohrung aus mehreren radialen Bohrungen (10) im Hohlkolben besteht.

## Revendications

1.- Soupape de limitation de la pression constituée d'un piston (5) monté coulissant dans un boîtier (2) pour commander l'écoulement d'un fluide sous pression depuis une entrée (3) jusqu'à une sortie (4), une face frontale (7) du piston (5) fermant dans une large mesure l'entrée (3) lorsque la soupape est fermée, tandis que lorsque la soupape est ouverte, le piston (5) est déplacé par le fluide sous pression agissant sur la face frontale (7) contre l'action d'un ressort (6) et libère un écoulement non étranglé du fluide sous pression depuis l'entrée (3) jusqu'à la sortie (4), la chambre de ressort (9) délimitée par le piston (5) étant en communication avec la sortie (4) par l'intermédiaire d'un perçage de liaison (10) constamment ouvert indépendamment de la position du piston (5), cependant que sur la face frontale du piston (5) tournée vers l'entrée (3) il est prévu un perçage d'étranglement (8) débouchant dans la chambre de ressort (9), soupape caractérisée en ce que le diamètre du perçage d'étranglement (8) est au maximum un dixième du diamètre de l'entrée (3), tandis que le diamètre du perçage de liaison (10) est au plus trois fois plus grand que le diamètre du perçage d'étranglement (8).

2.- Soupape de limitation de la pression selon la revendication 1, caractérisée en ce que le piston est un piston creux (5) et que le perçage de liaison est constitué par une pluralité de perçages radiaux (10) dans le piston creux.

## Claims

1. A pressure-limiting valve comprising a piston (5) displaceably arranged in a casing (2) and serving to control the flow of a pressure medium between a casing inlet (3) and an outlet (4) thereof, in which, when the valve is closed, one end face (7) of the piston (5) substantially seals the inlet (3) and, when the valve is open, the piston (5) has been displaced against the bias of a spring (6) by the pressure medium acting on the piston's end face (7) and permits, as a result of its displacement, the pressure medium to flow unimpededly from the inlet (3) to the outlet (4), in which irrespective of the piston's (5) position a spring space (9) bounded by the piston (5) communicates through a permanently open communication bore (10) with the outlet (4), and in which the piston's (5) end face facing the inlet (3) is provided with a throttling bore (8) opening into the spring space (9), characterized in that the diameter of the throttling bore (8) is at most one tenth of that of the inlet (3), and in that the diameter of the communication bore (10) is at most thrice that of the throttling bore (8).

2. A pressure-limiting valve according to claim 1, characterized in that the piston (5) is a hollow one, and in that the communication bore includes a number of bores (10) extending radially through the hollow piston (5).